(19) Europäisches Patentamt
European Patent Office
Office européen des brevets

(11) **EP 3 491 709 B1**

(12) **EUROPÄISCHE PATENTSCHRIFT**

(45) Veröffentlichungstag und Bekanntmachung des Hinweises auf die Patenterteilung:
**03.06.2020   Patentblatt 2020/23**

(21) Anmeldenummer: **17736895.8**

(22) Anmeldetag: **26.06.2017**

(51) Int Cl.:
**H02H 9/00** *(2006.01)*      **G05F 1/573** *(2006.01)*

(86) Internationale Anmeldenummer:
**PCT/EP2017/065695**

(87) Internationale Veröffentlichungsnummer:
**WO 2018/019503 (01.02.2018 Gazette 2018/05)**

(54) **EIGENSICHERE SCHALTUNGSANORDNUNG**

INTRINSICALLY SAFE CIRCUIT ARRANGEMENT

CIRCUIT À SÉCURITÉ INTRINSÈQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.07.2016   DE 102016114032**

(43) Veröffentlichungstag der Anmeldung:
**05.06.2019   Patentblatt 2019/23**

(73) Patentinhaber: **Endress+Hauser Flowtec AG**
**4153 Reinach (CH)**

(72) Erfinder:
• **KOCH, Bernhard**
  **79713 Bad Säckingen (DE)**
• **LALLA, Robert**
  **79541 Lörrach (DE)**

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
**EP-A2- 2 779 346      DE-U1- 20 010 283**
**US-A- 4 438 473**

**Beschreibung**

Die Erfindung bezieht sich auf eine eigensichere Schaltungsanordnung zur Versorgung eines Verbrauchers sowie ein System der Automatisierungstechnik, welches eine solche Schaltungsanordnung umfasst.

Feldgeräte der Automatisierungstechnik werden zur Erfassung und/oder Beeinflussung von Prozessvariablen eingesetzt. Beispiele für solche Feldgeräte sind Füllstandsmessgeräte, Massendurchflussmessgeräte, Druck- und Temperaturmessgeräte, pH-Redoxpotential-Messgeräte, Leitfähigkeitsmessgeräte etc., die als Sensoren die entsprechenden Prozessvariablen Füllstand, Durchfluss, Druck, Temperatur, pH-Wert bzw. Leitfähigkeitswert erfassen. Zur Beeinflussung von Prozessvariablen dienen sogenannte Aktoren, z. B. Ventile, die den Durchfluss einer Flüssigkeit in einem Rohrleitungsabschnitt steuern oder Pumpen, die den Füllstand in einem Behälter ändern. Als Feldgeräte werden somit im Prinzip alle Geräte bezeichnet, die prozessnah eingesetzt werden und die prozessrelevante Informationen liefern oder verarbeiten. Unter dem in Verbindung mit der Erfindung verwendeten Begriff Feldgerät sind somit alle Typen von Messgeräten und Aktoren zu subsumieren. Weiterhin umfasst der Begriff Feldgerät aber auch z.B. ein Gateway, einen Funkadapter oder andere in ein Bussystem integrierte/integrierbare Busteilnehmer.

Eine Vielzahl solcher Feldgeräte wird von der Firmengruppe Endress + Hauser hergestellt und vertrieben.

Um Feldgeräte mit Energie zu versorgen dienen Schaltungsanordnungen, an die das Feldgerät anschließbar ist. Hierbei kann die Schaltungsanordnung sowohl ein Teil des Feldgerätes darstellen und in einem Feldgerätgehäuse zusammen mit anderen Elementen des Feldgerätes angeordnet sein, oder aber die Schaltungsanordnung ist abgesetzt von dem Feldgerätgehäuse angeordnet.

Um ein Feldgerät in explosionsgefährdeten Bereichen einzusetzen, sind strenge Sicherheitsanforderungen zu beachten. Diese haben das Ziel eine Funkenbildung, die ggf. eine Explosion auslösen könnte, zu vermeiden oder zu verhindern, so dass ein im Inneren eines abgeschlossenen Raumes entstehender Funke keine Auswirkungen auf die Umgebung hat. Dieses Ziel ist auf verschiedenen Wegen erreichbar. Die entsprechenden Explosionsschutzmaßnahmen werden in Zündschutzarten unterteilt, die in entsprechenden Industrienormen, wie zum Beispiel der Normenreihe IEC 60079 der Internationalen Elektrotechnischen Kommission, geregelt sind.

Eine in der Praxis für Feldgeräte besonders relevante Zündschutzart ist die "Eigensicherheit (Exi)", welche in der Norm IEC EN DIN 60079-11 festgelegt ist. Die Zündschutzart "Eigensicherheit (Ex-i)" basiert auf dem Prinzip der Strom- und/oder Spannungsbegrenzung in dem Stromkreis der Schaltungsanordnung zur Versorgung des Gerätes. Hierbei wird die Energie des Stromkreises, die in der Lage sein könnte, eine explosionsgefährdete Atmosphäre zum Zünden zu bringen, so begrenzt, dass weder durch ein Funken noch durch unzulässige Erwärmung der elektrischen Bauteile die Zündung der umgebenden explosionsfähigen Atmosphäre stattfinden kann.

Derartige Schaltungsanordnungen sind aus dem Stand der Technik, beispielsweise aus der US 4 438 473 A oder der DE 200 10 283 U1 bekannt. Nachteilig an ihnen ist, dass trotz der in der Schaltungsanordnung begrenzten Energie im Fehlerfall, bspw. bei einem Kurzschluss am Ausgang, immer noch relativ hohe Verlustleistungen in der Begrenzungsschaltung auftreten. Diese Verlustleistung wird gewöhnlich in Form von Erwärmung der elektrischen Bauteile freigesetzt.

Aus dem Stand der Technik ist ferner die EP 2 779 346 A2 bekannt geworden, die ein Verfahren und eine Vorrichtung mit einem Strombegrenzer offenbart.

Es ist daher eine Aufgabe der Erfindung eine eigensichere Schaltungsanordnung vorzuschlagen, bei der im Fehlerfall die Verlustleistung möglichst niedrig gehalten wird.

Die Aufgabe wird erfindungsgemäß durch eine eigensichere Schaltungsanordnung zur Versorgung eines Verbrauchers mit einem maximalen Leistungsbedarf gelöst, wobei die Schaltungsanordnung folgendes umfasst:

- eine Spannungsquelle;
- einen an die Spannungsquelle angeschlossenen Spannungsüberwacher zur Begrenzung einer Ausgangsspannung auf einen maximalen Ausgangsspannungswert;
- einen an den Spannungsüberwacher angeschlossenen Strombegrenzungswiderstand zur Begrenzung eines Ausgangsstromes auf einen maximalen Ausgangsstromwert;
- eine zwischen dem Spannungsüberwacher und dem Strombegrenzungswiderstand angeschlossene aktiv gesteuerte Strombegrenzungsschaltung zur Begrenzung des Ausgangstromes auf einen Strombegrenzungswert, wobei die Strombegrenzungsschaltung derartig ausgebildet ist, dass sie zumindest den Ausgangsstrom auf den Strombegrenzungswert in Abhängigkeit eines Spannungsabfalls über zumindest einem Teil der Strombegrenzungsschaltung regelt, wenn eine Belastung der Schaltungsanordnung über der Nennlast vorliegt, so dass eine Anpassung des Strombegrenzungswertes, vorzugsweise anhand einer vorbestimmten Kennlinie, und somit auch des Ausgangstromes erfolgt, wobei die Strombegrenzungsschaltung zumindest einen ersten Shuntwiderstand, einen Transistor, eine Referenzspannungsquelle, einen Operationsverstärker und eine erste Regelschleife aufweist, wobei der Transistor in Reihe zu dem ersten Shuntwiderstand geschaltet ist und die erste Regelschleife über dem Transistor ausgebildet ist und einen Spannungsteiler in Reihe zu einem ersten Mittel, welches einen Strom erst ab einem bestimmten Spannungswert durchlässt aufweist, wobei ein Ausgang des Operationsverstärkers mit einem Gate des Transistors verbunden ist, wobei die Referenzspannungsquelle vor dem ersten Shuntwiderstand angeordnet ist und eine Referenzspannung erzeugt, welche an einem ersten Eingang des Operationsverstärkers anliegt, wobei eine Teilspannung des Spannungsteilers der ersten Regelschleife an einem zweiten Eingang des Operationsverstärkers anliegt und die erste Regelschleife derart ausgebildet ist, dass sich in dem Fall, dass ein Spannungsabfall über dem Transistor den bestimmten Spannungswert des ersten Mittels überschreitet ein Regelschleifenstrom einstellt, so dass die Strombegrenzungsschaltung über die Teilspannung des Spannungsteilers den Strombegrenzungswert anpasst.

Erfindungsgemäß wird eine Schaltungsanordnung vorgeschlagen, die im Fehlerfall eine in der Schaltungsanordnung auftretenden maximale Verlustleistung durch Anpassung eines Stromes möglichst niedrig hält, umso zu vermeiden, dass es zu einer übermäßigen Erwärmung bzw. einem übermäßigen thermischen Verlust kommt.
Eine vorteilhafte Weiterbildung der erfindungsgemäßen Schaltungsanordnung sieht vor, dass die Strombegrenzungsschaltung anhand einer vorbestimmten im Wesentlichen rechteckförmigen Kennlinie erfolgt.

Eine weitere vorteilhafte Weiterbildung der erfindungsgemäßen Schaltungsanordnung sieht vor, dass die Strombegrenzungsschaltung anhand einer vorbestimmten zumindest abschnittsweise degressiven Kennlinie erfolgt, so dass die Anpassung des Strombegrenzungswertes in Abhängigkeit des Spannungsabfalls variabel erfolgt.

Wiederum eine weitere vorteilhafte Weiterbildung der erfindungsgemäßen Schaltungsanordnung sieht ferner einen Shunt-Regler vor, der derartig ausgebildet ist, dass ein Querstrom durch den Shunt-Regler fließt, wenn eine Betriebsspannung des Shunt-Reglers höher als eine Nennspannung des Shunt-Reglers ist und wobei die Strombegrenzungsschaltung ferner dazu ausgebildet ist, dass sie den Strombegrenzungswert in Abhängigkeit eines für den Querstrom festgelegten Schwellwertes regelt. Insbesondere kann die Weiterbildung vorsehen, dass die Strombegrenzungsschaltung den Strombegrenzungswert derartig regelt, dass der Querstrom durch den Shunt-Regler den Schwellwert nicht mehr überschreitet und/oder der Shunt-Regler zumindest einen zweiten Shuntwiderstand und ein zweites Mittel zum Festlegen des Schwellwertes umfasst, wobei der zweite Shuntwiderstand und das zweite Mittel vorzugsweise in Reihe angeordnet sind. Ferner kann die Weiterbildung vorsehen, dass ein Widerstandswert des zweiten Shuntwiderstandes des Shunt-Reglers derartig gewählt ist, dass der Querstrom kleiner 5%, vorzugsweise kleiner 2,5%, besonders bevorzugt kleiner 2% als der maximale Ausgangsstromwert ist, wenn die Strombegrenzungsschaltung den Strombegrenzungswert regelt.

Wiederum eine weitere vorteilhafte Weiterbildung der erfindungsgemäßen Schaltungsanordnung sieht vor, dass der Spannungsüberwacher eine Crowbar-Schaltung mit einem Thyristor und einer Schmelzsicherung umfasst.

Eine letzte vorteilhafte Weiterbildung der erfindungsgemäßen Schaltungsanordnung sieht vor, dass zumindest ein Teil des Spannungsüberwacher, der Strombegrenzungsschaltung oder des Shunt-Reglers redundant, vorzugsweise zweifach redundant, besonders bevorzugt dreifach redundant, ausgebildet ist.

Die Aufgabe wird darüber hinaus durch ein System der Automatisierungstechnik gelöst, welches eine eigensichere Schaltungsanordnung, die gemäß einer zuvor beschriebenen Ausgestaltung ausgebildet ist, und ein Feldgerät der Automatisierungstechnik aufweist, wobei das Feldgerät mit der eigensicheren Schaltungsanordnung zur Energieversorgung verbunden ist.

Eine vorteilhafte Weiterbildung des erfindungsgemäßen Systems sieht vor, dass das Feldgerät in einem explosionsgefährdeten Bereich und die Schaltungsanordnung in einem nichtexplosionsgefährdeten Bereich angeordnet sind.

Die Erfindung wird anhand der nachfolgenden Zeichnungen näher erläutert. Es zeigt:

Fig. 1: eine aus dem Stand der Technik bekannte Schaltungsanordnung zur eigensicheren Versorgung,

Fig. 2: eine hinsichtlich des Verhältnisses von Verlustleistung zu Nutzleistung verbesserte Schaltungsanordnung,

Fig. 3: exemplarisch eine aktiv geregelte Strombegrenzungsschaltung mehr im Detail,

Fig. 4: eine rechteckförmige Kennlinie, die der aktiven Strombegrenzungsschaltung zugrunde liegt,

Fig. 5: eine hinsichtlich des Verhältnisses von Verlustleistung zu Nutzleistung gegenüber der in Fig. 2 dargestellten Schaltungsanordnung nochmals verbesserte Schaltungsanordnung,

Fig. 6: exemplarisch eine Strombegrenzungsschaltung der eine degressive Kennlinie zugrunde liegt,

Fig. 7: eine degressive Kennlinie, die der aktiven Strombegrenzung zugrunde liegt,

Fig. 8: eine eigensichere Schaltungsanordnung, die im Vergleich zu der in Fig. 5 dargestellten Schaltungsanordnung, verbesserte Eigenschaften hinsichtlich der Stabilisierung der Ausgangsspannung aufweist, und

Fig. 9: ein System der Automatisierungstechnik umfassend eine eigensichere Schaltungsanordnung und ein Feldgerät, welches von der Schaltungsanordnung gespeist wird.

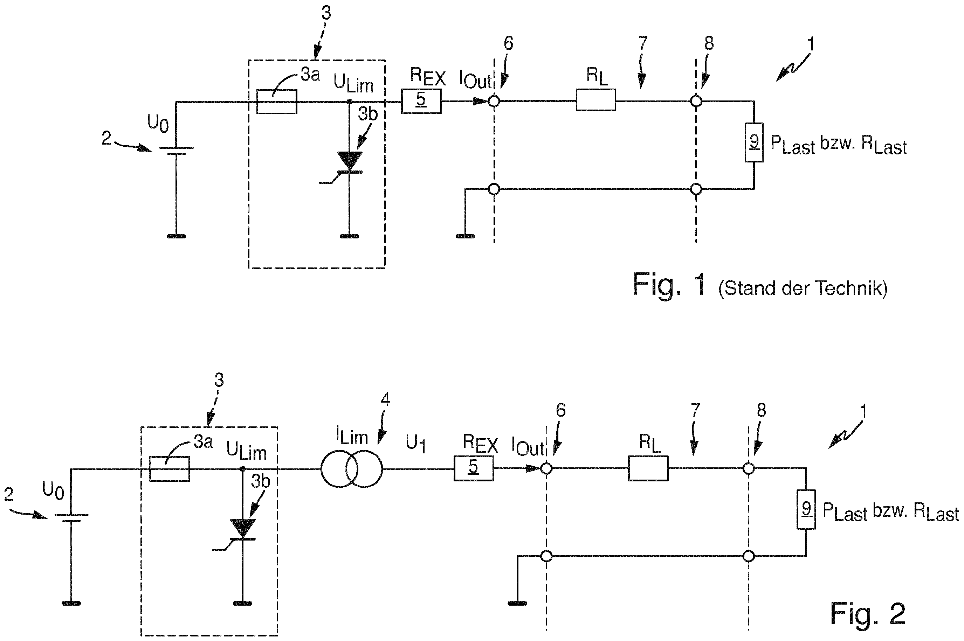

Figur 1 zeigt eine aus dem Stand der Technik bekannte Schaltungsanordnung zur eigensicheren Versorgung 1. Diese umfasst eine Spannungsquelle 2, einen aktiven Spannungsüberwacher bzw. -begrenzer 3 sowie ein Strombegrenzungswiderstand 5 zur Begrenzung eines Ausgangsstromes auf einen maximalen Ausgangsstromwert $I_{max}$, ein erstes Anschlussklemmenpaar 6 zum Anschluss einer Verbindungsleitung 7 und ein zweites Anschlussklemmenpaar 8 zum Anschluss eines Verbrauchers bzw. einer Last 9, wie bspw. ein Feldgerät 9, umfasst.

In der in Fig. 1 dargestellten Schaltungsanordnung ist an die Spannungsquelle 2 der Spannungsüberwacher 3 angeschlossen, an den wiederum der Strombegrenzungswiderstand 5 gefolgt von dem ersten Anschlussklemmenpaar 6 angebunden ist. An das erste Anschlussklemmenpaar 6 ist eine Verbindungsleitung 7 angeschlossen, die das erste Anschlussklemmenpaar 6 mit dem zweiten Anschlussklemmenpaar 8 verbindet, so dass an dem zweiten Anschlussklemmenpaar 8 der Verbraucher bzw. die Last 9 anschließbar ist.

Der Spannungsüberwacher 3 ist derartig ausgelegt, dass eine Eingangsspannung $U_0$ der Spannungsquelle 2 einen durch den Spannungsüberwacher 3 vordefinierten bzw. festgelegten Wert $U_{Lim}$ nicht überschreitet. Typischerweise wird als Spannungsüberwacher 3 eine Crowbar-Schaltung verwendet, die derartig ausgelegt ist, dass in dem Fall, dass die Eingangsspannung $U_0$ den vordefinierten Wert $U_{Lim}$ überschreitet ein Thyristor 3b gezündet bzw. aktiviert wird, so dass eine Schmelzsicherung 3a zum Durchbrennen gebracht wird. Durch das bewusste Zerstören der Schmelzsicherung 3a werden die nachfolgenden Schaltungsteile von der Spannungsquelle 2 getrennt.

Der in Fig. 1 dargestellte Strombegrenzungswiderstand 5 ist mit seinem Widerstandswert $R_{Ex}$ derartig dimensioniert, dass ein Ausgangsstrom $I_{Out}$ an dem ersten Anschlussklemmenpaar 6 auf einen maximalen Ausgangsstromwert $I_{max}$ von

$$I_{max} = \frac{U_{Lim}}{R_{Ex}}$$

im Kurzschlussfall begrenzt wird. Ein derartiger ohmscher Widerstand ist aus sicherheitsrelevanten Gründen für die Eigensicherheit "Ex-i" unerlässlich und auch entsprechend in der Norm IEC EN DIN 60079-11 vorgeschrieben.

Durch den entsprechend dimensionierten Strombegrenzungswiderstand 5 ergibt sich im Kurzschlussfall an dem ersten Anschlussklemmenpaar 6 eine maximale Verlustleistung $P_{Vmax}$ von

$$P_{Vmax} = \frac{{U_{Lim}}^2}{R_{Ex}} .$$

Der Verbraucher bzw. die Last 9, der bzw. die an dem zweiten Anschlussklemmenpaar 8 über die Verbindungsleitung 7 mit einem maximalen Leitungswiderstand $R_L$ verbunden ist, steht somit eine maximale Nutzleistung $P_{max}$ von höchstens

$$P_{max} = \frac{{U_0}^2}{4 \cdot (R_{Ex} + R_L)}$$

zur Verfügung.

Dies bedeutet, dass im schlechtesten Fall die Verlustleistung in der Schaltungsanordnung je nach Leitungswiderstand $R_L$ mindestens um den Faktor 4 höher als die Nutzleistung für den Verbraucher 9 ist.

Fig. 2 zeigt eine hinsichtlich des Verhältnisses von Verlustleistung zu Nutzleistung gegenüber der in Fig. 1 dargestellten Schaltungsanordnung verbesserte eigensichere Schaltungsanordnung 1. Hierzu ist, zusätzlich zu den in Fig. 1 dargestellten Bauteilen eine elektronische Strombegrenzungsschaltung 4 zur Begrenzung des Ausgangsstromes zwischen dem Spannungsüberwacher 3 und dem Ausgangswiderstand angeordnet. Die Strombegrenzungsschaltung 4 begrenzt den Ausgangsstrom $I_{Out}$ auf einen maximalen Strombegrenzungswert $I_{Lim, max}$ von

$$I_{Lim,max} = \frac{U_0}{2 \cdot (R_{Ex} + R_L)}$$

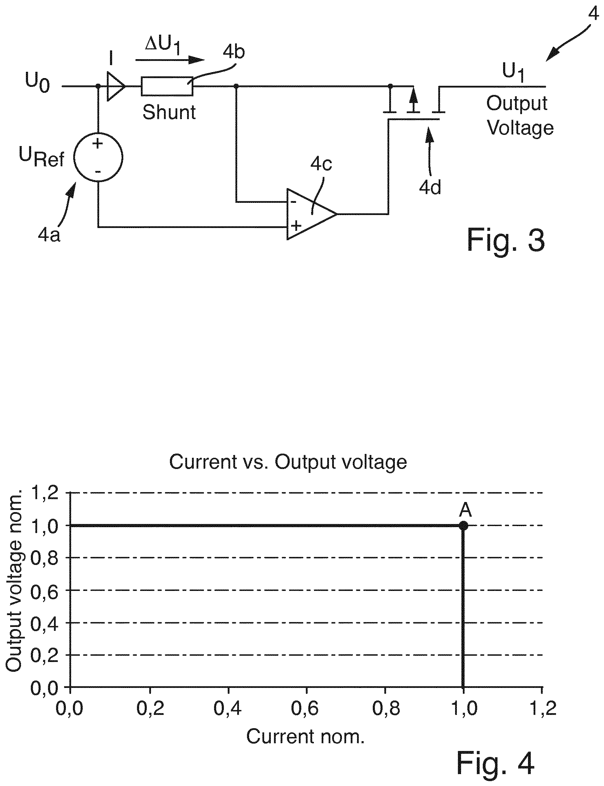

Fig. 3 zeigt exemplarisch eine aktiv geregelte Strombegrenzungsschaltung mehr im Detail. Diese umfasst einen ersten Shuntwiderstand 4b, eine Referenzspannungsquelle 4a einen Operationsverstärker 4c und einen Transistor 4d, bspw. einen Feldeffekttransistor, vorzugsweise einen p-Kanal-Feldeffekttransistor. Die Strombegrenzungsschaltung 4 ist derartig eingerichtet, dass in dem Fall, dass ein Spannungsabfall $\Delta U_1$ über dem Shuntwiderstand 4b im Wesentlichen kleiner als eine durch die Referenzspannungsquelle 4a erzeugte Referenzspannung $U_{Ref}$ ist, der Ausgang des Operationsverstärkers 4c zur negativen Versorgungspannung gezogen wird, so dass der an den Operationsverstärker angebundene p-Kanal-Feldeffekttransistor durchschaltet und in dem Fall, dass der Spannungsabfall über dem Shuntwiderstand im Wesentlichen gleich oder größer der Referenzspannung $U_{Ref}$ ist, der Ausgang des Operationsverstärkers zur positiven Versorgungspannung gezogen wird, so dass der Feldeffekttransistor sperrt.

Auf diese Weise wird der Ausgangsstrom $I_{Out}$ der in Fig. 2 dargestellten Schaltungsanordnung gemäß einer im Wesentlichen rechteckförmigen Kennlinie begrenzt.

Fig. 4 zeigt eine solche rechteckförmige Kennlinie, welche charakteristisch für die in Fig. 3 dargestellte Strombegrenzungsschaltung ist.

Exemplarisch wird das Verhalten der in Fig. 2 dargestellten Schaltungsanordnung mit einer aktiv geregelten Strombegrenzungsschaltung gemäß Fig. 3 an zwei Fällen, einmal, dass keine Begrenzung und einmal, dass eine Begrenzung durch die Strombegrenzungsschaltung 4 vorliegt, erläutert.

In dem Fall, dass keine Begrenzung vorliegt, ist die Spannung am Punkt $U_1$ im Wesentlichen gleich der Eingangsspannung $U_0$ (Punkt A in Fig. 4). Somit fällt im Wesentlichen keine Spannung über der Strombegrenzungsschaltung 4 ab Unter der Annahme, dass die Schaltungsanordnung auf den Verbraucher mit einer Nennlast $R_{Last}$ optimal abgestimmt ist, d.h. im leistungsangepassten Fall ($R_{Ex} + R_L = R_{Last}$), ergibt sich eine maximale Nutzleistung $P_{max}$ von

$$P_{max} = \frac{U_0{}^2}{4 \cdot (R_{Ex} + R_L)} \, .$$

In dem Fall, dass eine Begrenzung vorliegt (links des Punkt A in Fig. 4), weicht die Spannung am Punkt $U_1$ von der Eingangsspannung $U_0$ ab, so dass eine Spannung $\Delta U_1$ über der Strombegrenzungsschaltung 4 abfällt.

Eine derartige Strombegrenzungsschaltung 4 verändert die maximal entnehmbare Nutzleistung $P_{max}$ im Vergleich zu der Schaltungsanordnung gemäß Fig. 1 nicht. Allerdings reduziert sich die maximale Verlustleistung in der Schaltungsanordnung 4 auf

$$P_V = I_{Lim} \cdot U_{Lim} = \frac{U_0 \cdot U_{Lim}}{2 \cdot (R_{Ex} + R_L)} \, .$$

Dies führt zu einem um einen Faktor 2 verbesserten Verhältnis von Verlustleistung zu Nutzleistung. Nichtsdestotrotz ist das Verhältnis aber immer noch mindestens doppelt so hoch wie die Nutzleistung.

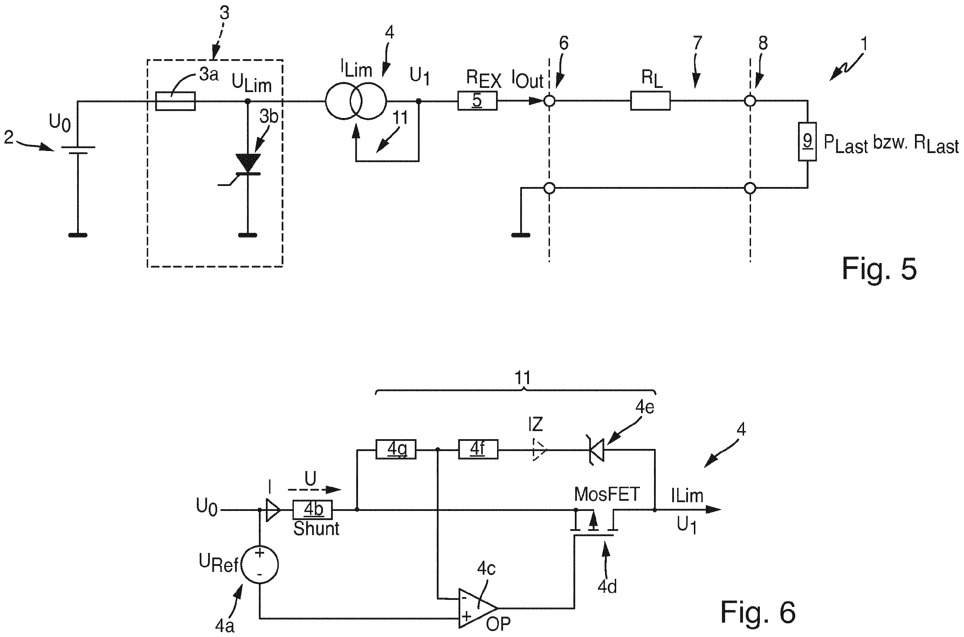

Fig. 5 zeigt eine hinsichtlich des Verhältnisses von Verlustleistung zu Nutzleistung nochmals verbesserte Schaltungsanordnung. Dies wird dadurch erreicht, dass die aktive Strombegrenzungsschaltung 4 mit Rechteckkennlinie durch eine Strombegrenzungsschaltung der eine degressive Kennlinie zugrunde liegt, ersetzt wird. Hierzu weist die Strombegrenzungsschaltung 4, genau wie die in Fig. 3 dargestellte Strombegrenzungsschaltung 4, wiederum einen ersten Shuntwiderstand 4b, einen Transistor 4d, eine Referenzspannungsquelle 4a, einen Operationsverstärker 4c und zusätzlich eine erste Regelschleife 11 auf.

Durch die Maßnahme verändert sich der maximale Strombegrenzungswert $I_{Lim,max}$ im Vergleich zu dem gemäß der in Fig. 2 dargestellten Schaltungsanordnung nicht und ist weiterhin

$$I_{Lim,max} = \frac{U_0}{2 \cdot (R_{Ex} + R_L)} \, .$$

Allerdings reduziert sich die maximale Verlustleistung Pv in der Schaltungsanordnung gemäß Fig. 5 in Abhängigkeit der zugrunde liegenden degressiven Kennlinie auf

$$P_V = P_{V(Strombegrenzung)} + P_{V(Strombegrenzungswiderstnad)}$$

$$= (U_{Lim} - U_1) \cdot I_{Lim(U1)} + I_{Lim(U1)}^2 \cdot R_{Ex} \,,$$

wobei $P_{V(Strombegrenzung)}$ der Verlustleistung der Strombegrenzungsschaltung und $P_{V(Strombegrenzungswiderstand)}$ der Verlustleistung des Strombegrenzungswiderstandes entspricht.

Vereinfacht betrachtet, ergibt sich die maximale Verlustleistung in der Schaltungsanordnung in dem Fall, dass der Spannungsabfall ($U_{Lim}$ - $U_1$) über der Strombegrenzungsschaltung im Wesentlichen Null ist, so dass sich ein theoretischer Maximalwert für die Verlustleistung von

$$P_V = \hat{I}_{Lim}^2 \cdot R_{Ex}$$

ergibt.

Basierend auf dieser Überlegung lässt sich die theoretische Verlustleistung zu

$$P_V = \frac{U_0^2}{2 \cdot (R_{Ex} + R_L)} \cdot \frac{R_{Ex}}{2 \cdot (R_{Ex} + R_L)}$$

bestimmen. Unter der Annahme, dass der Leitungswiderstand $R_L$ gegenüber Strombegrenzungswiderstand $R_{Ex}$ vernachlässigbar gering ist, ergibt sich

$$P_V = \frac{1}{2} \frac{U_0^2}{2 \cdot (R_{Ex} + R_L)}$$

Dies bedeutet, dass die theoretisch maximal mögliche Verlustleistung gleich der an dem zweiten Anschlussklemmenpaar entnehmbaren Nutzleistung ist.

Fig. 6 zeigt exemplarisch einen Strombegrenzer dem eine degressive Kennlinie zugrunde liegt. Diese umfasst zusätzlich zu den in Fig. 3 dargestellten Bauteilen eine erste Regelschleife 11.

Die erste Regelschleife 11 umfasst einen Spannungsteiler 4f, 4g und ein erstes Mittel 4e, welches einen Regelschleifenstrom $I_Z$ erst ab einem bestimmten Spannungswert durchlässt. In dem Fall, dass an dem ersten Mittel 4e der bestimmte Spannungswert anliegt bzw. dieser Spannungswert überschritten wird, stellt sich ein Regelschleifenstrom $I_Z$ ein, so dass eine Teilspannung über dem Spannungsteiler abfällt. Diese Teilspannung ist einem zweiten Eingang des Operationsverstärkers 4c zugeführt. Dem ersten Eingang des Operationsverstärkers ist, wie in dem in Fig. 3 dargestellten Beispiel auch, eine Referenzspannung $U_{Ref}$ der Referenzspannungsquelle 4a zugeführt, so dass der Operationsverstärker 4c einen nachgeschalteten Feldeffekttransistor steuert.

In dem in Fig. 6 dargestellten Beispiel ist das erste Mittel in Form einer Zenerdiode realisiert, die in Reihe zu dem Spannungsteiler bestehend aus zwei Widerständen geschaltet ist. Die Zenerdiode 4e ist dabei mit der Anode an Source des Feldeffekttransistors 4d und mit der Kathode an den Spannungsteiler 4f, 4g angeschlossen, wobei die Teilspannung des Spannungsteilers 4f, 4g an den Operationsverstärker 4c geführt ist. Somit fließt in dem Fall, dass die Source-Drain-Spannung des Feldeffekttransistors 4d die Zenerspannung überschreitet, ein Regelschleifenstrom $I_Z$, welcher einen Spannungsabfall über dem Spannungsteiler 4f, 4g erzeugt und durch die Teilspannung wird der Operationsverstärker 4c derartig geregelt, dass mit zunehmendem Spannungsabfall der Strom auf den Strombegrenzungswert $I_{Lim}$ reduziert wird. Das erste Mittel 4e ist allerdings nicht auf eine Zenerdiode beschränkt, sondern kann bspw. auch zwei in Reihe geschaltete Dioden oder ähnliche Bauteile darstellen.

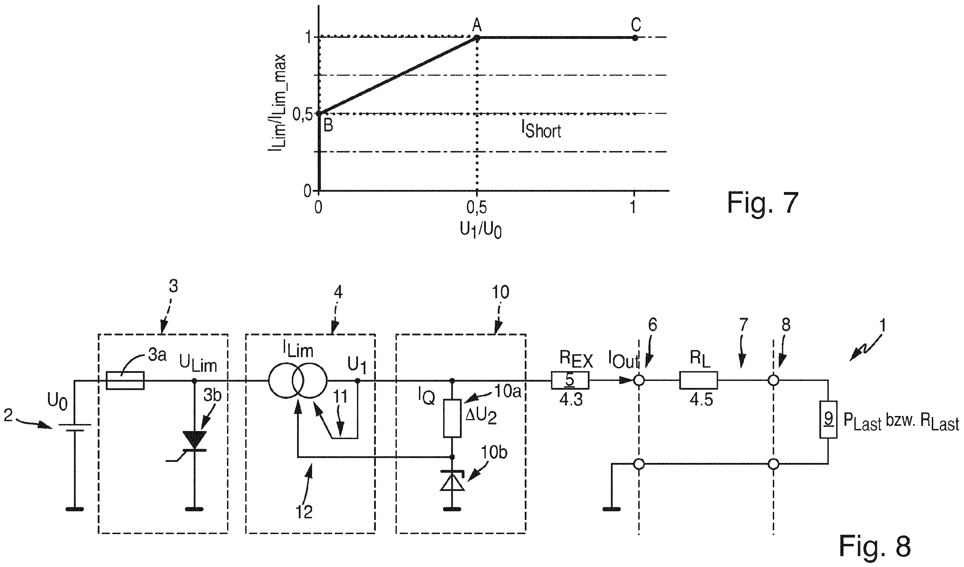

Fig. 7 zeigt eine idealisierte degressive Kennlinie, die der zuvor beschriebenen aktiven Strombegrenzungsschaltung 4 zugrunde liegt. Hierbei stellen die Punkte "A" und "B" für die Strombegrenzungsschaltung 4 charakteristische Punkte dar, die je nach konkreter Ausgestaltung der Strombegrenzungsschaltung 4, d.h. Dimensionierung der Bauteile, variable einstellbar sind. So wird anhand des Punktes "A" festgelegt, ab welchem Spannungswert (in Fig. 7 in dem Fall, dass $U_1 = 0,5^* U_0$) der Strom $I_{Lim}$ durch die Strombegrenzungsschaltung begrenzt wird. Wohingegen anhand des Punktes "B" der maximale Strom im Kurzschlussfall festgelegt wird. In Fig. 7 ist der maximale Strom $I_{Lim}$ auf den im Kurzschlussfall von der Strombegrenzungsschaltung 4 geregelt wird gleich der Hälfte des maximal möglichen Strombegrenzungswerts

$I_{Lim,max}$.

Fig. 8 zeigt eine eigensichere Schaltungsanordnung, wie sie auch in Fig. 5 dargestellt ist, die hinsichtlich der Stabilisierung der Ausgangsspannung verbesserte Eigenschaften aufweist. Bei der in Fig. 5 dargestellten Schaltungsanordnung muss der vordefinierte bzw. festgelegte Wert $U_{Lim}$ des Spannungsüberwachers 3 aufgrund von Toleranzen deutlich höher gewählt werden als die für den Betrieb der Schaltungsanordnung gewünschte Ausgansspannung. Um die an dem ersten Anschlussklemmenpaar 6 gewünschte Ausgangsspannung näher an den vordefinierten bzw. festgelegten Wert $U_{Lim}$ des Spannungsüberwachers legen zu können, wird die Schaltung um einen Shunt-Regler bzw. Spannungsregler 10 erweitert.

Der Shunt-Regler 10 umfasst einen Widerstand 10a und ein in Serie angeordnetes zweites Mittel 10b zum Festlegen eines Schwellwertes bzw. Nennspannung. Das zweite Mittel 10b kann bspw. eine zweite Zenerdiode sein, deren Zenerspannung als Schwellwert dient. Alternativ kann das zweite Mittel aber auch in Form eines Feldeffekttransistors ausgebildet sein. Der Shunt-Regler 10 ist mit dem Widerstand zwischen der Strombegrenzungsschaltung und dem Ausgangswiderstand $R_{Ex}$ angeordnet und wird von einem Querstrom $I_Q$ durchflossen. Der Widerstandswert des Widerstandes wird möglichst klein gewählt, so dass der Querstrom $I_Q$ typischerweise deutlich kleiner 5% als der maximale Strombegrenzungswert $I_{Lim, max}$ ist, der sich wiederum, wie bereits erwähnt, zu

$$I_{Lim,max} = \frac{U_0}{2 \cdot (R_{Ex} + R_L)}$$

berechnet. Beispielsweise kann der Widerstandswert kleiner 5 Ohm, bevorzugt kleiner 3 Ohm, besonders bevorzugt kleiner 1 Ohm sein.

Der Shunt-Regler 10 sorgt dafür, dass in dem Fall, dass er aktiv ist, d.h. wenn eine Betriebsspannung höher als eine Nennspannung, bspw. die Zenerspannung der zweiten Zenerdiode, des Shunt-Reglers ist, dieser von dem Querstrom durchflossen wird. Aufgrund des Querstromes $I_Q$ findet eine Belastung der Strombegrenzungsschaltung statt. Um die Verlustleistung im aktiven Fall des Shunt-Reglers10 zu reduzieren, wird der Querstrom $I_Q$ über einen Spannungsabfall $\Delta U_2$ des Widerstands gemessen und über eine zweite Regelschleife 12 wird die Strombegrenzungsschaltung, bei Überschreitung eines für den Querstrom $I_Q$ festgelegten Schwellwertes, derartig geregelt, dass der Strombegrenzungswert $I_{Lim}$ soweit reduziert wird, bis der Querstrom $I_Q$ durch den Shunt-Regler 10 den Schwellwert nicht mehr überschreitet, so dass die durch den Shunt-Regler 10 verursachte Verlustleistung minimiert wird.

In dem Fall, dass der Shunt-Regler 10 nicht aktiv ist, d.h. wenn die Betriebsspannung niedriger als die Nennspannung bzw. Zenerspannung der Zenerdiode ist, funktioniert die Strombegrenzungsschaltung, wie bei der in Fig. 5 dargestellten Schaltungsanordnung auch. Dies bedeutet, dass bei einer Belastung der Schaltungsanordnung unterhalb oder gleich der Nennlast, diese noch nicht aktiv den Ausgangsstrom regelt und somit auch nur einen vernachlässigbaren Spannungsabfall $\Delta U_2$ aufweist. In dem Fall, dass eine Überschreitung der Nennlast, bspw. aufgrund eines Kurzschlusses, vorliegt, reduziert die Strombegrenzungsschaltung 4 den Strombegrenzungswert $I_{Lim}$ in Abhängigkeit des Spannungsabfalls über der Strombegrenzung entsprechend einer definierten Kennlinie.

Die in den Fig. 2 bis 8 dargestelltem Schaltungsanordnungen sind einfach ausgebildet. Es kann aber auch vorgesehen sein, dass zumindest ein Teil des Spannungsüberwachers 3, der Strombegrenzungsschaltung 4 oder des Shunt-Reglers redundant ausgebildet ist. Hierbei können die redundanten Elemente sowohl zweifach als auch dreifach redundant ausgebildet sein.

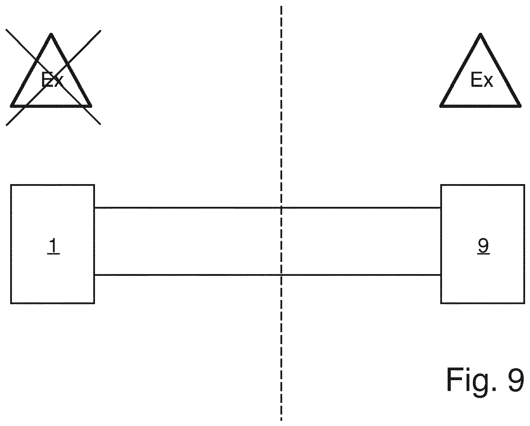

Fig. 9 zeigt ein System der Automatisierungstechnik 13 umfassend eine eigensichere Schaltungsanordnung 1 und ein Feldgerät 9, welches von der Schaltungsanordnung 1 gespeist wird. Hierbei ist die eigensichere Schaltungsanordnung 1 wie zuvor in einer Ausführung beschrieben ausgeführt. Die eigensichere Schaltungsanordnung 1 sitzt dabei in einem nichtexplosionsgefährdeten Bereich, wohingegen das Feldgerät 9 in einem explosionsgefährdeten Bereich sitzt und von der Schaltungsanordnung 1 mit Energie versorgt wird.

**Bezugszeichenliste**

| | |
|---|---|
| 1 | Schaltungsanordnung zur eigensicheren Versorgung |
| 2 | Spannungsquelle |
| 3 | Spannungsüberwacher bzw. -begrenzer |
| 3a | Schmelzsicherung |
| 3b | Thyristor |
| 4 | Strombegrenzungsschaltung |
| 4a | Referenzspannungsquelle |

| 4b | Erster Shuntwiderstand |
|---|---|
| 4c | Operationsverstärker |
| 4d | Feldeffekttransistor |
| 4e | Erstes Mittel, bspw. in Form einer Zenerdiode |
| 4f, 4g | Widerstände des Spannungsteilers |
| 5 | Strombegrenzungswiderstand |
| 6 | Erstes Anschlussklemmenpaar |
| 7 | Verbindungsleitung |
| 8 | Zweites Anschlussklemmenpaar |
| 9 | Verbraucher bzw. Last, bspw. in Form eines Feldgerätes |
| 10 | Shunt-Regler |
| 10a | Zweiter Shuntwiderstand |
| 10b | Zweites Mittel, bspw. in Form einer zweiten Zenerdiode |
| 11 | Erste Regelschleife |
| 12 | Zweite Regelschleife |
| 13 | System der Automatisierungstechnik |
| $R_{Ex}$ | Ausgangswiderstand bzw. Strombegrenzungswiderstand |
| $R_{Last}$ | Nennlast des Verbrauchers |
| $I_{max}$ | Maximaler Ausgangsstrom |
| $I_Z$ | Schleifenstrom der Regelschleife |

## Patentansprüche

1. Eigensichere Schaltungsanordnung (1) zur Versorgung eines Verbrauchers (9) mit einem maximalen Leistungsbedarf ($P_{Last}$) umfassend:

   - eine Spannungsquelle (2);
   - einen an die Spannungsquelle (2) angeschlossenen Spannungsüberwacher (3) zur Begrenzung einer Ausgangsspannung auf einen maximalen Ausgangsspannungswert;
   - einen an den Spannungsüberwacher (3) angeschlossenen Strombegrenzungswiderstand (5) zur Begrenzung eines Ausgangsstromes ($I_{out}$) auf einen maximalen Ausgangsstromwert ($I_{max}$);
   - eine zwischen dem Spannungsüberwacher (3) und dem Strombegrenzungswiderstand (5) angeschlossene aktiv gesteuerte Strombegrenzungsschaltung (4) zur Begrenzung des Ausgangstromes ($I_{out}$) auf einen Strombegrenzungswert ($I_{Lim}$), wobei die Strombegrenzungsschaltung (4) derart ausgebildet ist, dass sie zumindest den Ausgangsstrom ($I_{Out}$) auf den Strombegrenzungswert ($I_{Lim}$) in Abhängigkeit eines Spannungsabfalls über zumindest einem Teil der Strombegrenzungsschaltung (4) regelt, wenn eine Belastung der Schaltungsanordnung über der Nennlast vorliegt, so dass eine Anpassung des Strombegrenzungswertes ($I_{Lim}$), vorzugsweise anhand einer vorbestimmten Kennlinie, und somit auch des Ausgangstromes ($I_{out}$) erfolgt, wobei die Strombegrenzungsschaltung (4) zumindest einen ersten Shuntwiderstand (4b), einen Transistor (4d), eine Referenzspannungsquelle (4a), einen Operationsverstärker (4c) und eine erste Regelschleife (11) aufweist, wobei der Transistor (4d) in Reihe zu dem ersten Shuntwiderstand (4b) geschaltet ist und die erste Regelschleife (11) über dem Transistor (4d) ausgebildet ist und einen Spannungsteiler (4f, 4g) in Reihe zu einem ersten Mittel, welches einen Strom erst ab einem bestimmten Spannungswert durchlässt (4e) aufweist, wobei ein Ausgang des Operationsverstärkers (4c) mit einem Gate des Transistors verbunden ist, wobei die Referenzspannungsquelle (4a) vor dem ersten Shuntwiderstand (4b) angeordnet ist und eine Referenzspannung (URef) erzeugt, welche an einem ersten Eingang des Operationsverstärkers (4c) anliegt, wobei eine Teilspannung des Spannungsteilers der ersten Regelschleife an einem zweiten Eingang des Operationsverstärkers (4c) anliegt und die erste Regelschleife (11) derart ausgebildet ist, dass sich in dem Fall, dass ein Spannungsabfall über dem Transistor den bestimmten Spannungswert des ersten Mittels (4e) überschreitet ein Regelschleifenstrom einstellt, so dass die Strombegrenzungsschaltung (4) über die Teilspannung des Spannungsteilers den Strombegrenzungswert anpasst.

2. Schaltungsanordnung nach Anspruch 1, wobei die Strombegrenzungsschaltung (4) anhand einer vorbestimmten im Wesentlichen rechteckförmigen Kennlinie erfolgt.

3. Schaltungsanordnung nach Anspruch 1 oder 2, wobei die Strombegrenzungsschaltung (4) anhand einer vorbestimmten zumindest abschnittsweise degressiven Kennlinie erfolgt, so dass die Anpassung des Strombegrenzungswertes ($I_{Lim}$) in Abhängigkeit des Spannungsabfalls variabel erfolgt.

4. Schaltungsanordnung nach wenigstens einem der vorherigen Ansprüche, ferner umfassend einen Shunt-Regler (10), der derartig ausgebildet ist, dass ein Querstrom ($I_Q$) durch den Shunt-Regler (10) fließt, wenn eine Betriebsspannung des Shunt-Reglers (10) höher als eine Nennspannung des Shunt-Reglers (10) ist und wobei die Strombegrenzungsschaltung (4) ferner dazu ausgebildet ist, dass sie den Strombegrenzungswert in Abhängigkeit eines für den Querstrom ($I_Q$) festgelegten Schwellwertes regelt.

5. Schaltungsanordnung nach dem vorherigen Anspruch, wobei die Strombegrenzungsschaltung den Strombegrenzungswert derartig regelt, dass der Querstrom ($I_Q$) durch den Shunt-Regler (10) den Schwellwert nicht mehr überschreitet.

6. Schaltungsanordnung nach dem vorherigen Anspruch, wobei der Shunt-Regler (10) zumindest einen zweiten Shuntwiderstand (10a) und ein zweites Mittel zum Festlegen des Schwellwertes (10b) umfasst, wobei der zweite Shuntwiderstand (10a) und das zweite Mittel (10b) vorzugsweise in Reihe angeordnet sind.

7. Schaltungsanordnung nach dem vorherigen Anspruch, wobei ein Widerstandswert des zweiten Shuntwiderstandes (10a) des Shunt-Reglers (10) derartig gewählt ist, dass der Querstrom ($I_Q$) kleiner 5%, vorzugsweise kleiner 2,5%, besonders bevorzugt kleiner 2% als der maximale Ausgangsstromwert ist, wenn die Strombegrenzungsschaltung (4) den Strombegrenzungswert regelt.

8. Schaltungsanordnung nach einem der vorhergehenden Ansprüche, wobei der Spannungsüberwacher (3) eine Crowbar-Schaltung mit einem Thyristor (3b) und einer Schmelzsicherung (3a) umfasst.

9. Schaltungsanordnung nach einem der vorhergehenden Ansprüche, wobei zumindest ein Teil des Spannungsüberwachers (3), der Strombegrenzungsschaltung (4) oder des Shunt-Reglers (10) redundant, vorzugsweise zweifach redundant, besonders bevorzugt dreifach redundant, ausgebildet ist.

10. System der Automatisierungstechnik, umfassend eine eigensichere Schaltungsanordnung (1) nach wenigstens einem der vorhergehenden Ansprüche und ein Feldgerät (9) der Automatisierungstechnik, wobei das Feldgerät (9) mit der eigensicheren Schaltungsanordnung (1) zur Energieversorgung verbunden ist.

11. System der Automatisierungstechnik nach Anspruch 10, wobei das Feldgerät (9) in einem explosionsgefährdeten Bereich und die Schaltungsanordnung (1) in einem nichtexplosionsgefährdeten Bereich angeordnet sind.

**Claims**

1. Intrinsically safe circuit arrangement (1) designed to supply energy to a consumer (9) with a maximum power demand ($P_{Last}$), comprising:

   - a voltage source (2) ;
   - a voltage monitor (3) connected to the voltage source (2), said monitor being designed to limit an output voltage to a maximum output voltage value,
   - a current limiting resistor connected to the voltage monitor (3), said resistor being designed to limit an output current ($I_{Out}$) to a maximum output current value ($I_{max}$);
   - a current limiting circuit (4) connected between the voltage monitor (3) and the current limiting resistor (5), said circuit being actively controlled and designed to limit the output current ($I_{Out}$) to a current limitation value ($I_{Lim}$), said current limiting circuit (4) being designed in such a way to regulate at least the output current ($I_{Out}$) to a current limitation value ($I_{Lim}$) depending on a drop in voltage over at least one part of the current limiting circuit (4) if a load on the circuit arrangement is greater than the nominal load, such that the current limitation value ($I_{Lim}$) is adapted, preferably using a predefined characteristic, and the output current ($I_{Out}$) is also adapted, wherein the current limiting circuit (4) has at least a first shunt resistor (4b), a transistor (4d), a reference voltage source (4a), an operation amplifier (4c) and a first control loop (11), wherein the transistor (4d) is switched in series with the first shunt resistor (4b) and the first control loop (11) is formed over the transistor, and a voltage divider (4f, 4g) is in series with a first means (4e), which only lets a current pass as of a certain voltage value,

   wherein an output of the operation amplifier (4c) is connected to a gate of the transistor, wherein the reference voltage source (4a) is arranged in front of the first shunt resistor (4b) and generates a reference voltage (URef), which is applied at a first input of the operation amplifier (4c), wherein a partial voltage of the voltage divider of the first control loop is applied at a second input of the operation amplifier (4c) and the first control loop (11) is designed in such a way that - in the event that a drop in voltage over the transistor exceeds the determined voltage value of the first means (4e) - a control current loop is set such that the current limiting circuit (4) adapts the current limitation value via the partial voltage of the voltage divider.

2. Circuit arrangement as claimed in Claim 1, wherein the current limiting circuit (4) is implemented according to a predefined, essentially rectangular, characteristic curve.

3. Circuit arrangement as claimed in Claim 1 or 2, wherein the current limiting circuit (4) is implemented according to a predefined characteristic curve, which is at least partially degressive, such that the adaptation of the current limitation value ($I_{Lim}$) is performed in a variable manner as a function of the drop in voltage.

4. Circuit arrangement as claimed in at least one of the previous claims, further comprising a shunt regulator (10), which is designed in such a way that a transversal current ($I_Q$) flows through the shunt regulator (10) if an operating voltage of the shunt regulator (10) is greater than a nominal voltage of the shunt regulator (10), and wherein the current limiting circuit (4) is further designed in such a way that it regulates the current limitation value as a function of a threshold value defined by the transversal current ($I_Q$).

5. Circuit arrangement as claimed in the previous Claim, wherein the current limiting circuit regulates the current limitation value in such a way that the transversal current ($I_Q$) flowing through the shunt regulator (10) no longer exceeds the threshold value.

6. Circuit arrangement as claimed in the previous Claim, wherein the shunt regulator (10) comprises at least a second shunt resistor (10a) and a second means to determine the threshold value (10b), wherein the second shunt resistor (10a) and the second means (10b) are preferably switched in series.

7. Circuit arrangement as claimed in the previous Claim, wherein a resistance value of the second shunt resistor (10a) of the shunt regulator (10) is selected in such a way that the transversal current ($I_Q$) is 5 % smaller, preferably 2.5 % smaller, particularly preferably 2 % smaller than the maximum value of the output current if the current limiting circuit (4) regulates the current limitation value.

8. Circuit arrangement as claimed in one of the previous claims, wherein the voltage monitor (3) comprises a crowbar circuit with a thyristor (3b) and a safety fuse (3a).

9. Circuit arrangement as claimed in at least one of the previous claims, wherein at least one part of the voltage monitor (3), of the current limiting circuit (4) or of the shunt regulator (10) has a redundant design, preferably a double redundant design, particularly preferably a triple redundant design.

10. System used in automation engineering, comprising an intrinsically safe circuit arrangement (1) as claimed in at least of one of the previous claims, and a field device (9) used in automation engineering, wherein the field device (9) is connected to the intrinsically safe circuit arrangement (1) for the provision of power.

11. System used in automation engineering as claimed in Claim 10, wherein the field device (9) is arranged in an explosive area and the circuit arrangement (1) is arranged in a non-explosive area.

**Revendications**

1. Configuration de circuit à sécurité intrinsèque (1) destinée à l'alimentation d'un consommateur (9) avec une demande de puissance maximale ($P_{Last}$), comprenant :

    - une source de tension (2) ;
    - un dispositif de surveillance de tension (3) raccordé à la source de tension (2), lequel dispositif est destiné à limiter une tension de sortie à une valeur de tension de sortie maximale,
    - une résistance limiteuse de courant raccordée au dispositif de surveillance de tension (3), laquelle résistance est destinée à limiter un courant de sortie ($I_{Out}$) à une valeur de courant de sortie maximale ($I_{max}$) ;

- un circuit limiteur de courant (4) raccordé entre le dispositif de surveillance de tension (3) et la résistance limiteuse de courant (5), lequel circuit est commandé activement et est destiné à limiter le courant de sortie ($I_{Out}$) à une valeur de limitation de courant ($I_{Lim}$), le circuit limiteur de courant (4) étant conçu de telle sorte à régler au moins le courant de sortie ($I_{Out}$) à une valeur de limitation de courant ($I_{Lim}$) en fonction d'une chute de tension via au moins une partie du circuit limiteur de courant (4), en présence d'une charge de la configuration de circuit supérieure à la charge nominale, si bien qu'une adaptation de la valeur de limitation de courant ($I_{Lim}$) a lieu de préférence sur la base d'une courbe caractéristique prédéfinie, et ainsi également une adaptation du courant de sortie ($I_{Out}$), le circuit limiteur de courant (4) comportant au minimum une première résistance shunt (4b), un transistor (4d), une source de référence de tension (4a), un amplificateur opérationnel (4c) et une première boucle de régulation (11), le transistor (4d) étant couplé en série avec la première résistance shunt (4b) et la première boucle de régulation (11) étant formée par le biais du transistor, et un diviseur de tension (4f, 4g) en série avec un premier moyen (4e), qui laisse passer un courant seulement à partir d'une valeur de tension déterminée,

une sortie de l'amplificateur opérationnel (4c) étant reliée à une grille du transistor, la source de tension de référence (4a) étant disposée en amont de la première résistance shunt (4b) et générant une tension de référence (URef), laquelle est appliquée à une première entrée de l'amplificateur opérationnel (4c), une tension partielle du diviseur de tension de la première boucle de régulation étant appliquée à une deuxième entrée de l'amplificateur opérationnel (4c) et la première boucle de régulation (11) étant conçue de telle sorte - dans le cas où une chute de tension aux bornes du transistor dépasse la valeur de tension déterminée du premier moyen (4e) - à régler le courant de la boucle de régulation de telle manière que le circuit limiteur de courant (4) adapte la valeur de limitation de courant via la tension partielle du diviseur de tension.

2. Configuration de circuit selon la revendication 1, pour laquelle la limitation du circuit limiteur de courant (4) intervient selon une courbe caractéristique prédéfinie, pour l'essentiel rectangulaire.

3. Configuration de circuit selon la revendication 1 ou 2, pour laquelle la limitation du circuit limiteur de courant (4) intervient selon une courbe caractéristique prédéfinie, au moins partiellement dégressive, si bien que l'adaptation de la valeur de limitation de courant ($I_{Lim}$) est réalisée de façon variable en fonction de la chute de tension.

4. Configuration de circuit selon au moins l'une des revendications précédentes, comprenant en outre un régulateur shunt (10), lequel est conçu de telle sorte à ce que circule un courant transversal ($I_Q$) à travers le régulateur shunt (10) lorsqu'une tension de fonctionnement du régulateur shunt (10) est supérieure à une tension nominale du régulateur shunt (10), et le circuit limiteur de courant (4) étant en outre conçu de telle sorte à régler la valeur de limitation de courant en fonction d'une valeur seuil définie pour le courant transversal ($I_Q$).

5. Configuration de circuit selon la revendication précédente, pour laquelle le circuit limiteur de courant règle la valeur de limitation de courant de telle sorte que le courant transversal ($I_Q$) circulant à travers le régulateur shunt (10) ne dépasse plus la valeur seuil.

6. Configuration de circuit selon la revendication précédente, pour laquelle le régulateur shunt (10) comprend au minimum une deuxième résistance shunt (10a) et un deuxième moyen pour la détermination de la valeur seuil (10b), la deuxième résistance shunt (10a) et le deuxième moyen (10b) étant de préférence couplés en série.

7. Configuration de circuit selon la revendication précédente, pour laquelle une valeur de résistance de la deuxième résistance shunt (10a) du régulateur shunt (10) est choisie de telle sorte que le courant transversal ($I_Q$) est inférieur à 5 %, de préférence inférieur à 2,5 %, particulièrement de préférence inférieur à 2 % à la valeur maximale du courant de sortie lorsque le circuit limiteur de courant (4) règle la valeur de limitation de courant.

8. Configuration de circuit selon au moins l'une des revendications précédentes, pour laquelle le dispositif de surveillance de tension (3) comprend un circuit de protection par court-circuit avec un thyristor (3b) et un fusible (3a).

9. Configuration de circuit selon au moins l'une des revendications précédentes, pour laquelle au moins une partie du dispositif de surveillance de tension (3), du circuit limiteur de courant (4) ou du régulateur shunt (10) est conçue avec une redondance, de préférence avec une double redondance, particulièrement de préférence avec une triple redondance.

10. Système de la technique d'automatisation, comprenant une configuration de circuit à sécurité intrinsèque (1) selon au moins l'une des revendications précédentes, ainsi qu'un appareil de terrain (9) de la technique d'automatisation, l'appareil de terrain (9) étant relié à la configuration de circuit à sécurité intrinsèque (1) en vue de l'alimentation en énergie.

11. Système de la technique d'automatisation selon la revendication 10, pour lequel l'appareil de terrain (9) est disposé dans une zone explosible et la configuration de circuit (1) est disposée dans une zone non explosible.

Fig. 1 (Stand der Technik)

Fig. 2

Fig. 3

Current vs. Output voltage

Fig. 4

Fig. 5

Fig. 6

EP 3 491 709 B1

EP 3 491 709 B1

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4438473 A
- DE 20010283 U1
- EP 2779346 A2